Europäisches Patentamt

European Patent Office

Office européen des brevets

(11) Numéro de publication: **0014154**
**A1**

(12) **DEMANDE DE BREVET EUROPEEN**

(21) Numéro de dépôt: **80400111.3**

(22) Date de dépôt: **23.01.80**

(51) Int. Cl.³: **A 01 F 25/20,** B 60 P 1/36, B 60 P 1/38

---

(30) Priorité: **29.01.79 FR 7902185**

(43) Date de publication de la demande: **06.08.80**
**Bulletin 80/16**

(84) Etats contractants désignés: **AT BE CH DE GB IT LU NL SE**

(71) Demandeur: **Société dite: S.A. AUDUREAU, La Copechagniere, F-85260 L'Herbergement (Vendée) (FR)**

(72) Inventeur: **Audureau, Bernard, La Copechagniere, F-85260 L'Herbergement (Vendée) (FR)**

(74) Mandataire: **Ducas, Michel et al, Cabinet Boettcher 23, rue La Boétie, F-75008 Paris (FR)**

---

(54) **Appareil tracté de reprise et transport de matériaux.**

㉗ L'invention concerne un appareil tracté de reprise et transport de matériaux dans lequel une benne 1, comportant un transporteur transversal 3 et un bras 40 articulé portant à son extrémité une paroi mobile 12 pivotante pour prendre au tas et tasser un matériau, est montée à son avant sur deux bras oscillants 44 autour d'un axe 45 et la hauteur de la benne 1 est réglable par des vérins 48. L'invention s'applique à la reprise en tas et en silos notamment agricoles.

EP 0 014 154 A1

ACTORUM AG

L'invention a pour objet un appareil tracté de reprise et transport de matériaux comportant une benne, dont une paroi est une paroi mobile pouvant servir .de pelle racleuse à attaque verticale ou oblique, disposée pivotante à l'extrémité d'un bras articulé.

De tels appareils sont connus, notamment dans l'agriculture, pour désiler, transporter et distribuer des produits. Les moyens d'action sur le bras articulé et sur la paroi mobile sont généralement des vérins hydrauliques.

La hauteur d'attaque d'un tas ou d'un silo est déterminée par la hauteur à laquelle on peut soulever le bord d'attaque de la paroi mobile.

Un but de l'invention est d'augmenter la hauteur d'attaque sans augmenter l'encombrement de l'appareil. Un autre but est de donner à l'appareil une bonne assise au sol, soit pour l'utiliser en position fixe, soit pour attaquer un matériau ou produit compact, tel que fourrage stocké en vert.

Ces buts sont atteints, selon l'invention, par le fait que l'appareil comporte des moyens de réglage en hauteur de la benne.

Selon un premier mode de réalisation, dans lequel l'appareil comprend un berceau de roulement sur lequel est montée la benne avec sa paroi mobile dirigée vers l'arrière, considéré dans le sens de traction, la benne est montée articulée pivotante par son avant à l'avant du berceau de roulement.

Selon une variante, dans laquelle l'appareil comprend une remorque sur laquelle est montée la benne avec sa paroi mobile dirigée vers l'arrière, considéré dans le sens de traction, la remorque comprend des bras oscillants de suspension.

Selon un mode de réalisation préféré, le berceau et/ou les bras de suspension présentent, entre les roues et les axes d'articulations pivotantes, des saillies de portée au sol en position basse de la benne.

Il est alors avantageux que les saillies

2

soient obtenues par le fait que le berceau et/ou les bras sont coudés vers le bas.

D'autres caractéristiques et avantages ressortiront de la description, qui sera donnée ci-après uniquement à titre d'exemples, de modes de réalisation de l'invention. On se reportera, à cet effet, aux dessins annexés dans lesquels :

- La figure 1 est une coupe selon I de la figure 2 d'une benne faisant partie d'un appareil tracté selon l'invention.

- La figure 2 est une vue en coupe, dans la direction de son déplacement tracté d'un appareil de l'invention muni de la benne de la figure 1.

- La figure 3 est une coupe semblable d'une variante d'appareil selon l'invention.

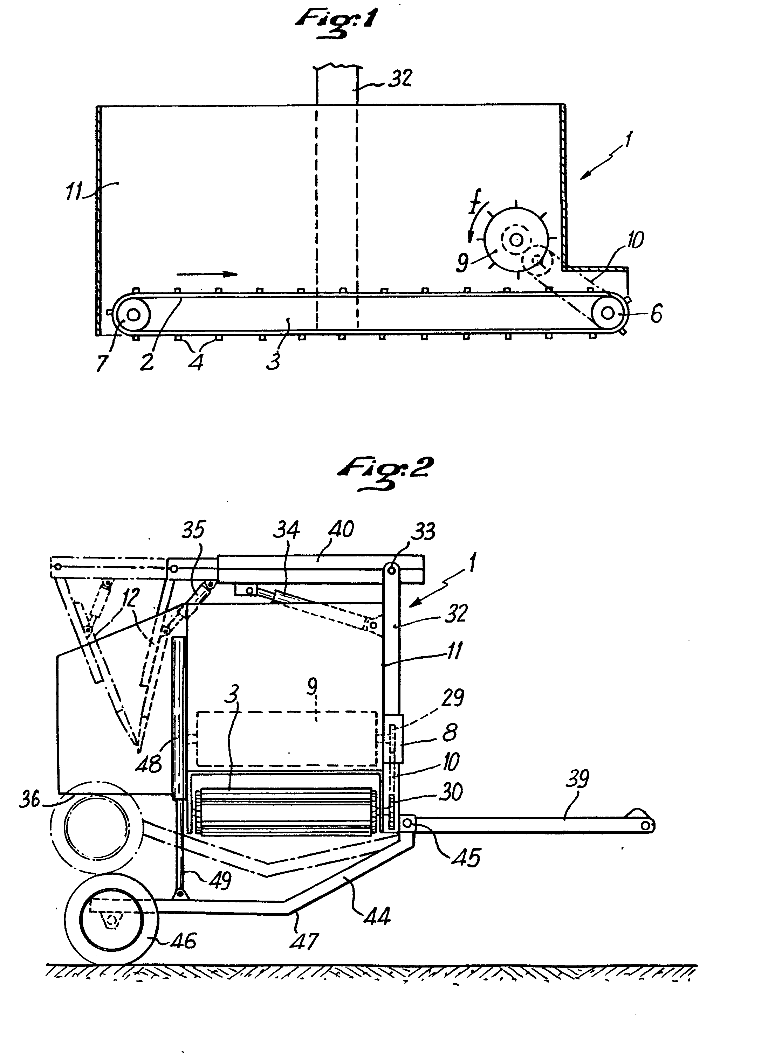

Une benne tractée, désignée dans son ensemble par 1, comporte dans son fond 2 un transporteur 3 à raclettes 4 entraînées par des chaînes 5 d'entraînement sans fin autour de deux tambours 6 et 7. Le tambour 6 est entraîné, comme il est connu en soi, par un moteur hydraulique 8 au moyen d'un ensemble constitué par une chaîne 10 et deux pignons dentés 29 et 30. Le moteur hydraulique 8, qui entraîne le pignon denté 29, entraîne également un tambour 9 démêleur ou déchiqueteur disposé au voisinage du point de déversement, à droite sur la figure 1 du transporteur 3.

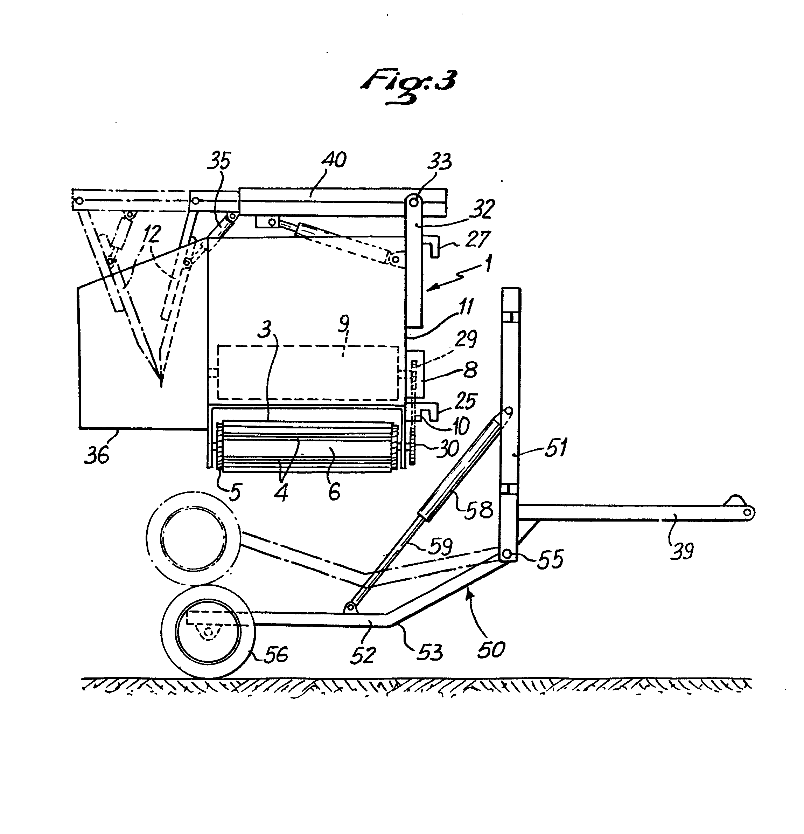

Une des parois latérales, 12, de la benne est une paroi mobile pouvant servir de pelle racleuse à attaque verticale de haut en bas. Elle est montée pivotante à l'extrémité d'un bras 40 télescopique monté articulé à l'extrémité 33 d'un montant central 32 de la paroi latérale 11 opposée à la paroi 12. Son mouvement est commandé par l'élongation du bras 40 et par deux vérins 34 et 35 permettant de l'amener, depuis une position haute, comme il est connu, jusqu'à une position basse représentée aux figures 2 et 3, après qu'elle ait abattu, le cas échéant, en position intermédiaire et raclé les matériaux ou produits d'un tas ou d'un silo en les amenant sur un seuil de déversement 36 sur le transporteur 3.

Une combinaison de mouvement d'élongation et de raccourcissement du bras télescopique 40 et du mouvement de pivotement de la paroi 12 à l'extrémité du bras 40 permet de tasser les produits pris et de les amener au-dessus du transporteur 3.

Dans le mode de réalisation représenté à la figure 2, la benne 1 est montée articulée pivotante sur un axe 45, à droite de la figure, sur l'extrémité d'un berceau 44 portant, à son autre extrémité un train de deux roues 46. Le berceau 44, qui est coudé en 47, sensiblement en son milieu, est lié, par ailleurs, à la trémie 1 par un vérin hydraulique 48, dont le corps est fixé par articulation à la trémie 1 et dont l'extrémité de la tige 49 est articulée sur le berceau 44. Une barre d'attelage 39 complète l'ensemble, qui comprend en outre, comme il est connu en soi, des moyens de raccordement à une centrale hydraulique et un boîtier de commande des vérins.

Dans la variante de la figure 3 la trémie et sa remorque sont constituées en deux éléments séparables, pouvant être réunis, par exemple, par des crochets 27 pouvant s'enclencher et se verrouiller dans des logements 28 du châssis 51 vertical d'une remorque 50. La suspension de cette remorque 50 est constituée par deux bras oscillants 52 coudés vers le bas au voisinage de leurs points médians et portant un train de roues 56 à leurs extrémités éloignées de leur axe d'oscillation 55 sur le châssis 51. Le réglage de la hauteur du châssis 51 est obtenu au moyen de vérins 58 dont les corps sont articulés sur le châssis et dont les tiges 59 sont articulées sur les bras oscillants 52. Au châssis 51 est encore liée une barre d'attelage 39. Le châssis comprend en outre des moyens séparables de raccordement hydraulique et de commande hydraulique à une centrale et aux vérins.

Sur les figures 2 et 3 on a représenté en trait plein les suspensions dans la position mettant la

0014154

trémie 1 en position haute, tandis qu'on les a représentées en traits interrompus dans leur position mettant la
trémie 1 en position assise au sol.

## REVENDICATIONS

1) Appareil tracté de reprise et transport de matériaux comportant une benne (1) dont une paroi est une paroi mobile (12), pouvant servir de pelle racleuse à attaque verticale ou oblique, disposée pivotante à l'extrémité d'un bras articulé (40) caractérisé en ce qu'il comporte des moyens de réglage en hauteur de la benne.

2) Appareil selon la revendication 1, comprenant un berceau (44) de roulement sur lequel est montée la benne (1) avec sa paroi mobile (12) dirigée vers l'arrière, considéré dans le sens de traction, caractérisé en ce que la benne (1) est montée articulée pivotante par son avant (45) à l'avant du berceau (44) de roulement.

3) Appareil selon la revendication 1, comprenant une remorque sur laquelle est montée la benne (1) avec sa paroi mobile (12) dirigée vers l'arrière, considéré dans le sens de traction, caractérisé en ce que la remorque comprend des bras oscillants de suspension.

4) Appareil selon l'une quelconque des revendications 2 et 3, caractérisé en ce que le berceau et/ou les bras de suspension (44) présentent, entre les roues et les axes d'articulations pivotantes, des saillies (47) de portée au sol en position basse de la benne (1).

5) Appareil selon la revendication 4, caractérisé en ce que les saillies (47) sont obtenues par le fait que le berceau et/ou les bras (44) sont coudés vers le bas.

6) Appareil selon l'une des revendications 1 à 5, caractérisé en ce que la benne (1) comporte, en son fond, un transporteur (3) de déversement transversal au sens de déplacement de traction.

*Fig:1*

*Fig:2*

## Fig:3

**Office européen des brevets** — **RAPPORT DE RECHERCHE EUROPEENNE**

00014154

EP 80 40 0111

## DOCUMENTS CONSIDERES COMME PERTINENTS

| Catégorie | Citation du document avec indication, en cas de besoin, des parties pertinentes | Revendication concernee |
|---|---|---|
| X | <u>FR - A - 2 331 970</u> (O. STORTI)<br>* Page 2, lignes 17-32; figures 1,3 * | 1,3 |
| | <u>US - A - 2 941 843</u> (O. DE MURREL)<br>* Colonne 2, lignes 28-57; figures 2,3 * | 1 |
| | <u>US - A - 3 724 635</u> (W.A. BYRD)<br>* Colonne 3, lignes 42-57; figure 1 * | 1 |

---

**CLASSEMENT DE LA DEMANDE (Int. Cl**

A 01 F 25/20
B 60 P 1/36
1/38

**DOMAINES TECHNIQUES RECHERCHES (Int. Cl.**

B 60 P
B 65 G
A 01 F

**CATEGORIE DES DOCUMENTS CITES**

X: particulièrement pertinent
A: arrière-plan technologique
O: divulgation non-ecrite
P: document intercalaire
T: theorie ou principe a la base de l'invention
E: demande faisant interference
D: document cite dans la demande
L: document cité pour d'autres raisons

&: membre de la même famille, document correspondant

---

Le present rapport de recherche a ete etabli pour toutes les revendications

| Lieu de la recherche | Date d'achevement de la recherche | Examinateur |
|---|---|---|
| La Haye | 28-04-1980 | CAPRARI |

OEB Form 1503.1 06.78